Europäisches Patentamt

European Patent Office

Office européen des brevets

(19)

(11) **EP 1 162 173 A1**

## (12) EUROPEAN PATENT APPLICATION

(43) Date of publication:
**12.12.2001 Bulletin 2001/50**

(51) Int Cl.[7]: **C01B 33/26**, C09C 1/40,
D21H 17/68, D21H 21/10

(21) Application number: **01113061.4**

(22) Date of filing: **29.05.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **06.06.2000 IT MI201251**

(71) Applicant: **ECOSTAR S.r.l.
55016 PORCARI, LUCCA (IT)**

(72) Inventors:
- **Lazzari, Paolo
  55100 San Concordio, Lucca (IT)**
- **Frateschi, Marco
  55100 San Gimignano di Moriano, Lucca (IT)**

(74) Representative: **Sama, Daniele, Dr.
Sama Patents
Via Morgagni, 2
20129 Milano (IT)**

### (54) Aluminosilicates for paper mixtures

(57)     A process to obtain an aqueous suspension containing aluminosilicates obtained by synthesis from silicates and aluminum salts wherein to an amount of water such that the final suspension containing the aluminosilicate has a dry residue in the range 15-50% by weight, a solution of a sodium silicate of formula $Na_2O$. $nSiO_2$ wherein n ranges from 0.5 to 4 and contemporaneously a solution of an aluminum salt so that in the mixture the molar ratio Al/Si is between 0.13 and 0.30 are added under stirring in a time between 20 and 100 minutes; and aqueous suspensions obtainable from said process.

**Description**

The present invention relates to aquesous suspensions of synthesis aluminosilicates which are used in the paper and cardboard manufacture processes, as agents capable to induce microflocculation of the mixtures with improved retention, improved drainage and improved quality of the final sheet of paper; and the process for preparing said aqueous suspensions of aluminosilicates.

In the paper industry the need is felt to improve the production processes so as to obtain a high retention of the fillers (for example calcium carbonate, kaolin, etc.), and of the fine particles of the paper fibers on the production wire and contemporaneously to obtain a microflocculation of the paper mixture such as to improve the formation of the final sheet of paper.

Said treatments are generally carried out by adding to the mixture, in the order, cationic compounds as flocculating agents and anionic compounds to improve the retention and the drainage of the paper mixture. The cationic compounds are generally selected from cationic starch, polymers having an acrylic basis, aluminum salts. The anionic compounds, generally in the form of microparticles, are selected from colloidal silicas, bentonites, aluminosilicates.

Colloidal silicas can be formed by colloidal polysilicic acid, or by colloidal silica particles modified on the surface with aluminum as described in WO 86/00100. This latter compound is effective as coadjuvant to increase the retention and the drainage of the paper mixtures, but it has a high cost. Colloidal silica are generally prepared starting from concentrated solutions of sodium silicate, which are initially diluted to a $SiO_2$ titre of about 3% by weight. The diluted solutions are acidified, generally by ionic exchange resins, so as to have a pH comprised between 2 and 3, then concentrated to obtain a final $SiO_2$ titre between 10 and 30% by weight. Then sodium silicate is added to make the pH alkaline (pH 9).

Colloidal silicas are used together with other additives which are usually employed in the paper production process, such as for example cationic starch, aluminum polychloride, anionic and cationic polyelectrolytes. As said, colloidal silicas are lastly added to the paper mixture, before the flat table or production wire, in order to obtain the mixture microflocculation and consequently a retention increase, improving the formation of the final sheet of paper. Tests carried out by the Applicant have shown that the performances of said colloidal silica (commercial product Compozil®) as regards the drained volume and the retention in the recycled paper mixtures are not high.

Alternatively to colloidal silicas, aluminosilicates can be used. Said aluminosilicates can be of mineral origin, such for example bentonites, as described in patent application WO 98/22,653 and in EP 335,576. To be made suitable to the paper use the mineral must be treated with sodium hydroxide, dried and milled. Furthermore at the paper-factory a mixture must be prepared in water with the desired concentration to be added to the mixture. This implies additional costs at the paper-factory for the powder handling and formation of the suspension, and problems of environmental hygiene connected to the handling of the powders themselves. The Applicant has shown that the performances of natural aluminosilicates, used as additives in the paper mixture, are not high as regards the retention and the drained volume.

USP 2,739,073 describes the preparation of aluminosilicates starting from sodium silicate solutions having molar ratios $SiO_2/Na_2O$ in the range 1-3.5, and soluble aluminum salts. In the Examples of the patent aluminum sulphate is used. The process is carried out by mixing in 15 minutes the solutions of the two reactants in a determined initial amount of water, at room temperature and alkaline pH, under strong stirring. The obtained pulp is filtered, washed, dried, milled to obtain a powder suitable to the use as pigment in paints, in rubbers and in glazes for paper coating. The powder is formed by a mixture of metal oxides in the following molar ratios: $SiO_2/Na_2O$ from 1 to 4; $Na_2O/Al_2O_3$ from 0.8 to 1.2, therefore with a molar ratio Al/Si comprised between 0.4 and 2.5. The Applicant has shown that the suspension containing the aluminosilicate salt directly obtained from the reaction, and having a $SiO_2$ titre of about 3% by weight, is not stable in the time. Besides in the paper production cycle with this suspension, unsatisfactory retention and drained volume values are obtained.

Patent application WO 96/05,139 relates to microparticulated systems of aluminosilicates, aluminophosphatesilicates and aluminoboratesilicates for use as retention agents in the paper production process. According to this patent, see Example 1, the preparation of aluminosilicates is carried out by quickly adding at room temperature, under strong stirring, to an aqueous solution of sodium metasilicate having a ratio by weight $SiO_2/Na_2O$ of about 1, an aqueous solution of an aluminum salt, preferably aluminum sulphate. The obtained aluminosilicate has an estimated content of $SiO_2$ of 0.9%. Generally with this process a content by weight of $SiO_2$ lower than 5% and a molar ratio Al/Si in the range 0.4-0.7 can be obtained. The Applicant has shown that the aluminosilicate suspension directly obtained from the reaction according to Example 1 of this patent is not stable, and the mixtures using this suspension as retentive agent show unsatisfactory retention and drained volume values.

The need was felt to have available aluminosilicate suspensions prepared by mixing solutions of sodium silicate and aluminum salts which were stable and sufficiently concentrated, i.e. having a concentration of at least 15% by weight.

It has been found by the Applicant a process as hereafter described for directly obtaining an aqueous suspension of microparticles formed by aluminosilicates, stable in the time, to be used as retention agent or microflocculant of paper mixtures, able to improve the retention and the drainage of said mixtures with respect to the colloidal silicas, bentonites and synthesis aluminosilicates of the prior art.

According to the present invention the aqueous aluminosilicate suspensions show a high stability as defined below.

An object of the present invention is a process to obtain an aqueous suspension containing aluminosilicates obtained by synthesis from silicates and aluminum salts, comprising the following steps, carried out at a temperature in the range 5-95°C:

- transfer into a reactor of an amount of water such that the final suspension containing the aluminumsilicate has a dry residue, determined by evaporating in a stove at 105°C an aliquot of the suspension in a vessel until constant weight, in the range 15-50% by weight, preferably 20-35% by weight;
- addition under stirring to the amount of water initially transferred into the reactor, in a time in the range 20-100 minutes, preferably 60-90 minutes, of:

  - a solution of a sodium silicate of formula $Na_2O.nSiO_2$ wherein n ranges from 0.5 to 4, and contemporaneously
  - a solution of an aluminum salt so that in the mixture the molar ratio Al/Si is between 0.13 and 0.30, preferably 0.15-0.23, and the ratio $Na_2O/Al_2O_3$ is in the range 1.5-4, preferably 2-3.5.

With water-soluble salt it is meant a water-soluble compound for a percentage by weight of at least 10%.

The added aqueous solution of the aluminum salt has a concentration preferably in the range 5-18% by weight as $Al_2O_3$, while that of the sodium silicate is preferably in the range 10-30% by weight as $SiO_2$.

The solutions of these commercially available salts can be used, for example the solutions containing aluminum polychloride and having a concentration in $Al_2O_3$ of about 17% by weight, or solutions of aluminum sulphate containing an amount of $Al_2O_3$ of about 8% by weight; the available solutions containing sodium silicate have a concentration by weight of about 28% as $SiO_2$.

Preferably the used sodium silicate must have a ratio by weight $SiO_2/Na_2O$ between 2 and 4, still more preferably between 3 and 3.5.

Examples of water-soluble aluminum salts used in the process according to the present invention are aluminum sulphate, aluminum polychloride and aluminum polychlorosulphate, the formulas of which are reported in the prior art, see for example EP 285,486 for aluminum polychloride; or patent EP 557,153 for aluminum polychlorosulphate.

A general formula comprising said aluminum salts is the following:

$$AlN_bM_c(OH)_dCl_e(SO_4)_f$$

wherein:

N is an alkaline metal
M is an alkaline-earth metal,
b, c, d, e and f are integers such that the following equality is verified:

$$3 + b + 2c = d + e + 2f,$$

the molar ratio OH/3Al is in the range 0.25-0.8, preferably 0.3-0.65,
the limits of variation of the other parameters are the following: b in the range 0-1.5, c in the range 0-0.7, e in the range 1-2.2, f in the range 0-0.3.

The process according to the present invention to produce the suspensions containing aluminosilicates is particularly simple and not very expensive and it allows, as said, to obtain sufficiently concentrated suspensions (slurries) over 15% in dry product, and sufficiently stable to be directly commercialized as retention agents to be used as such in the paper production cycles.

The reaction which allows to obtain the aluminosilicate dispersion of the invention can be carried out also at room temperature and for example also on the production line at the paper-factory in a suitable vessel.

This avoids the drawback to use the solid silicate salts such as the above mentioned treated bentonites, for preparing the suspensions and maintaining them stable and homogeneous, and furthermore the above problems connected to the powder handling in the work environment.

A further object of the present invention are aqueous suspensions of aluminosilicates obtainable by the above process. Said suspensions show a high stability with respect to the aluminosilicate suspensions obtained by the processes of the prior art.

According to the present invention an aqueous suspension of an aluminosilicate is defined stable when an aqueous suspension having about 20% of dry residue, after having been transferred into a 100 ml graduated cylinder, in 15 days separates a limpid supernatant liquid having a volume lower than 30%, preferably 20% with respect to the initial volume of the suspension, i.e. the residue volume of the suspension (pulp) is higher than 70%, preferably higher than 80% with respect to the initial volume.

Said suspensions can further be stabilized up to a storage time of 6-12 months by adding small amounts (0.05-0.1% by weight of slurry) of suspending compounds of common use, such as for example xanthans, mannitol, etc.

The Applicant has shown that the above ratios are critical for the stability of the suspension of the aluminosilicates prepared by direct synthesis and for the improved retention and drainage performances. In fact when said ratios are outside the limits which have been set in the present invention, the suspension stability drastically decreases, together with the retention and drained volume performances.

The Applicant has furthermore shown that the suspensions according to the present invention allow to obtain the following advantages:

- superior results as retention and drainage to those of the compounds commercially available which are used as retentive agents in the paper production process,
- superior results to those of the suspensions of aluminosilicates obtained by using the processes of the prior art, as stability of the slurries and as retention and drained volume.

The obtained suspension () according to the present invention is used as such or diluted at the desired concentration in the paper production process as retention and drainage agent.

The suspensions obtained with the process of the present invention can advantageously be used in the paper production process wherein mixtures formed by recycled paper and/or mixtures formed by cellulose are used. In fact the suspensions according to the present invention unexpectedly show to confer improved retention and drainage both in mixtures formed by recycled paper and by cellulose. This represents a remarkable advantage from an industrial point of view with respect to the products at present available in connection with the kind of paper.

The following Examples illustrate the invention and do not limit the scope thereof.

EXAMPLE 1

Preparation of an aluminosilicate suspension (slurry)

The aqueous solution of sodium silicate has a $SiO_2$ titre of 28.5% by weight, and the ratio by weight $SiO_2/Na_2O$ in the salt is 3.3.

The aqueous solution of aluminum polychloride of the following formula $Al_a(OH)_dCl_e$, has a content as $Al_2O_3$ of 17.2% and as chlorine of 21.6%.

330 g of water are introduced in a 1 litre glass beaker. At the temperature of 22°C, in a global time of 60 minutes, under strong stirring, 214 g of sodium silicate and 66 g of the aqueous solution of aluminum polychloride are fed.

The formation of sodium aluminosilicate takes place contemporaneously with the addition of the solutions of the two reactants. When the addition is over it is left under stirring for 30 minutes.

A very fine and soft suspension is obtained having the following characteristics:

- Density at 20°C        1.11 g/ml
- dry residue at 105°C        22%
- $SiO_2$        10% by weight
- $Al_2O_3$        1.8% by weight
- Molar ratio Al/Si calculated on the basis of the added amounts of the reactants        0.21

The above process is repeated in Examples 2-6, maintaining constant the amount of sodium silicate which is added (214 g), the reaction time and the final stirring for 30 minutes at the end of the addition of the reactants.

In Table 1 the values of the following parameters are reported; they in the process change from an Example to the other: amounts in grams of water initially present in the reactor, amounts in grams of aluminum salt added during the reaction, molar ratio Al/Si, molar ratio $Na_2O/Al_2O_3$, and reaction temperature.

The just prepared suspension is poured into a 100 ml graduated cylinder (internal diameter 2 cm) bringing to volume. The sedimentation volume is determined on the sample (the initial volume subtracted of the volume of limpid supernatant water which separates) at the following times: 1 h, 5h, 1 day, 2 days and 15 days. The results are reported in Table 2.

EXAMPLES 2-5

One proceeds as in Example 1, considering the values reported in Table 1 as regards the reaction parameters which are changed.

Example 4 is comparative.

The just prepared suspension according to each Example is poured into a 100 ml graduated cylinder, which is brought to volume, then measuring the sedimentation volume at the times indicated in Example 1. The results are reported in Table 2.

EXAMPLE 6

The aqueous solution of aluminum polychloride is replaced by an aqueous solution containing aluminum sulphate having an $Al_2O_3$ content of 8% by weight. One proceeds as indicated in Examples 2-5.

The just prepared suspension is poured into a 100 ml graduated cylinder, which is brought to volume. Then the sedimentation volume is determined on the sample at the times indicated in Example 1. The results are reported in Table 2.

EXAMPLE 7 comparative

Preparation of an aluminosilicate suspension (slurry) according to Example 1 of patent application WO 96/05139

64 ml of an aqueous solution at 2.88% by weight of $Na_2SiO_3$ are transferred in a 200 ml beaker, equipped with magnetic stirrer. 50 ml of an aqueous solution of aluminum sulphate at 0.77% by weight of $Al_2O_3$ are quickly added under stirring in the time of three minutes. The reaction is carried out at room temperature, obtaining a suspension at about 0.9% by weight as $SiO_2$.

The mixture was kept under stirring for one further minute before stopping the reaction.

The molar ratio Al/Si, calculated on the basis of the amounts added of the two reactants is 0.49, the molar ratio $Na_2O/Al_2O_3$ is 3.9.

The process described in the patent allows therefore to prepare an aluminosilicate suspension having an Al/Si ratio higher than the limits of the present invention.

The just prepared suspension is poured into a 100 ml graduated cylinder, which is brought to volume, then determining the sedimentation volume at the times indicated in Example 1. The results are reported in Table 2.

EXAMPLE 8 comparative

Preparation of an aluminosilicate suspension (slurry) according to Example 1 of USP 2,739,073

The preparation has been carried out by reducing of 2,500 times the amounts considered in the Example of the mentioned patent to be able to operate on laboratory scale.

280 g of water are introduced in a 1 litre beaker, equipped with stirrer, and under strong stirring, at the temperature of 22°C, 256 g of a solution having a $Na_2SiO_3$ titre of 20.16% by weight which corresponds to the concentration of the solution prepared with 285 lbs of $Na_2SiO_3$ in 136 gals of water according to Example 1 of the US patent, and 254.3 ml of a solution containing 11.7% by weight of $Al_2(SO_4)_3$ (3.5% by weight as $Al_2O_3$), corresponding to the concentration of the solution prepared with 187 lbs of $Al_2(SO_4)_3$ in 169 gals of water used in the patent Example, are contemporaneously fed, in 15 minutes.

When the addition of the reactants is ended, the obtained suspension (slurry) is left under stirring for further 15 minutes.

The just prepared suspension is poured into a 100 ml graduated cylinder, which is brought to volume. Then the sedimentation volume is determined at the times indicated in Example 1. The results are reported in Table 2.

The molar ratio Al/Si calculated on the basis of the added amounts of the two reactants is 0.37, the molar ratio $Na_2O/Al_2O_3$ is 4.4.

Also in this case the molar ratio Al/Si results higher than the limits of the invention.

EXAMPLE 9

Comment on the data reported in Table 2

The Table shows that the suspensions obtained by the process object of the present invention have a stability higher than that of the suspensions of the prior art taken as comparison, and that said stability is achieved only by ratios Al/Si in the range 0.13-0.30 and by ratios $Na_2O/Al_2O_3$ in the range 1.5-4.
See comparative Example 4 (molar ratio Al/Si lower than the limits of the invention) and comparative Examples 7 and 8 (ratio Al/Si higher than the limits of the invention).

EXAMPLES 10-17

A mixture formed by only recycled paper with an ash content of 16.3%, calculated on the dry mixture, was used.
The mixture was refined at 52°SR (Shopper Riegler) and then diluted with water until having a 1% concentration by weight of dry residue.
500 g of the diluted mixture are introduced in a Britt type equipment. By maintaining the stirrer at the rate of 750 rpm the following compounds were added in the indicated amounts at intervals of 10 seconds:

- Cationic starch (Hi-Cato®165): 0.5% by weight on the dry mixture,
- Flocculating agent: cationic polyacrylamide (Praestaret® K302 L): 0.10% on the dry mixture,
- Retentive agent: suspension prepared according to one of the Examples 1-8 (see Table 3): 0.20% by weight with respect to the dry mixture. The suspension was used after 5 days from the preparation.

After 10 seconds from the addition of the last component the Britt bottom tap was turned on and the liquid filtered in the first 15 seconds was collected, which represents the drained volume.
To determine the retention, the solids in the drained product were recovered by filtration on pre-weighed filter paper, repeating the weighing after drying up to a constant weight at 105°C.
The retention was calculated according to the following formula:

$$\frac{\text{ppm of dry product in the mixture-ppm of dry product in the drained product}}{\text{ppm of dry product in the mixture}} \times 100$$

As reference controls two preparations were made: the former, indicated with B, formed by the mixture as such, without the starch, the flocculant and the retentive agent; the latter, indicated with B1, formed by the mixture added of starch and flocculant.
The results are reported in Table 3.

EXAMPLE 18 comparative

The process described in Examples 10-17 was repeated by using as retentive agent at the place of the suspension (slurry) Compozil® BMA 780 (colloidal silica covered with aluminum) in the same percentage by weight of 0.2% with respect to the dry product of the mixture.
The results are reported in Table 3.

EXAMPLE 19

Comment on the results of Table 3

The Table shows that the suspensions according to the present invention increase the retention and the drained volume of the recycling paper mixture.
The Table shows also that when the molar ratio Al/Si of the suspension used as retentive agent is lower than the limits of the present invention, as in Example 13 (suspension of the comparative Example 4), the drained volume and the retention meaningfully decrease and values are obtained which are of the same order of magnitude as those of the other comparative Examples 16 and 17 wherein the suspensions prepared according to the comparative Examples 7 (Ex. 1 of WO 96/01539) and 8 (Ex. 1 of US 2,739,073), have respectively been used, in which the ratio Al/Si is higher than the limits of the present invention.
The suspensions of the invention, used as retentive agents, show better performances as regards the retention compared with the product on trade Compozil®, while the drained volume is comparable or higher.

EXAMPLES 20-21

A paper mixture was prepared having the following composition:

- 32 % by weight of long fir fiber cellulose bleached by sulphite,
- 48 % by weight of short eucalyptus fiber cellulose bleached by sulphate,
- 20% by weight of $CaCO_3$.

The mixture was refined at 34°S.R. and subsequently diluted with water until having a 1% concentration by weight of dry residue.

500 g of the diluted mixture were introduced in the Britt equipment and treated as previously described for the mixture formed by recycled paper only.

As retentive agent in each Example the suspensions prepared according to Examples 1 and 3, used 5 days after their preparation, were respectively used.

As in the case of the previous Examples 10-19, two reference controls were prepared. The former, indicated with B°, was formed by the mixture as such, i.e. without the starch, the flocculant and the retentive agent; the latter, indicated with B°1, was formed by the same paper mixture containing in addition the starch and the flocculant.

The results (drained volume and retention) are reported in Table 4.

EXAMPLE 22 (comparative)

The process described in Examples 20-21 was repeated by using as retentive agent Hydrocol® "0" (bentonite in powder) in the same percentage by weight of 0.2% with respect to the mixture dry product.

The results are reported in Table 4.

EXAMPLE 23

Comment on the results of Table 4

The Table shows that the suspensions according to the invention, added as a retentive agent to a fresh paper mixture, allow to obtain improved retention and drained volume with respect to the mixture wherein the product Hydrocol® "0" has been used.

Table 1

| Process for obtaining the aluminosilicate suspension according to the invention: initial amount of water in the reactor, added amount of aluminum salt, molar ratios Al/Si and $Na_2O/Al_2O_3$, and reaction temperature used in Examples 1-6 | | | | | |
|---|---|---|---|---|---|
| Ex. | Init.$H_2O$ reactor g | Aluminum salt g | Al/Si molar ratio | $Na_2O/Al_2O_3$ molar ratio | Reaction temp. °C |
| 1 | 330 | 66* | 0.21 | 2.7 | 22 |
| 2 | 322 | 74* | 0.24 | 2.4 | 22 |
| 3 | 346 | 55* | 0.18 | 3.1 | 22 |
| 4 comp | 363 | 33* | 0.10 | 5.3 | 22 |
| 5 | 330 | 66* | 0.21 | 2.7 | 95 |
| 6 | 356 | 140** | 0.21 | 2.7 | 22 |
| In the Examples 1-5 the aluminum salt is aluminum polychloride*, in Example 6 it is aluminum sulphate**. | | | | | |

Table 2

| Sedimentation volumes in ml of the suspensions obtained according to the Examples of the invention and according to the comparative Examples 7-8. The volume at the zero time of each suspension is of 100 ml. | | | | | | |
|---|---|---|---|---|---|---|
| Ex. | Al/Si | t= 1 h | t= 5 h | t = 1 d | t =2 d | t=15 d |
| 1 | 0.21 | 100 | 100 | 98 | 98 | 95 |

Table 2 (continued)

| Ex. | Al/Si | t= 1 h | t= 5 h | t = 1 d | t =2 d | t=15 d |
|---|---|---|---|---|---|---|
| 2 | 0.24 | 95 | 90 | 85 | 82 | 81 |
| 3 | 0.16 | 100 | 100 | 100 | 99 | 98 |
| 4 comp | 0.10 | 80 | 51 | 35 | 33 | 28 |
| 5 | 0.21 | 100 | 100 | 99 | 97 | 94 |
| 7 comp | 0.49 | 90 | 75 | 68 | 65 | 58 |
| 8 comp | 0.37 | 91 | 86 | 77 | 73 | 66 |

Table 3

| Drained volume and retention of a recycled paper mixture treated with the aluminosilicate suspensions of the invention compared with the values obtained by treating the same mixture respectively with the suspensions obtained according to the prior art and with the product Compozil® BMA 780 | | | | |
|---|---|---|---|---|
| Ex. | suspension (retentive agent) Ex. | Molar ratio Al/Si | Drained volume ml | Retention % |
| 10 | 1 | 0.21 | 176 | 88 |
| 11 | 2 | 0.24 | 174 | 86 |
| 12 | 3 | 0.16 | 178 | 85 |
| 13 comp | 4 | 0.10 | 161 | 73 |
| 14 | 5 | 0.21 | 179 | 87 |
| 15 | 6 | 0.21 | 174 | 82 |
| 16 comp | 7 comp | 0.49 | 155 | 76 |
| 17 comp | 8 comp | 0.37 | 163 | 75 |
| 18 comp | Compozil® | n.d. | 172 | 79 |
| B | - | - | 94 | 61 |
| B1 | - | - | 151 | 72 |

Table 4

| Values of drained volume and retention of a paper mixture directly prepared by cellulose treated with the aluminosilicate suspensions of the invention compared with the values obtained by using in the same mixture the Hydrocol® "0" product. | | | | |
|---|---|---|---|---|
| Ex. | Suspension (retentive agent) Ex. | Molar ratio Al/Si | Drained volume ml | Retention % |
| 20 | 1 | 0.21 | 143 | 78 |
| 21 | 3 | 0.16 | 141 | 75 |
| 22 comp | Hydrocol® | - | 137 | 71 |
| $B^0$ | - | - | 94 | 55 |
| $B^0 1$ | - | - | 151 | 56 |

**Claims**

1. A process to obtain an aqueous suspension containing aluminosilicates obtained by synthesis from silicates and aluminum salts, comprising the following steps, carried out at a temperature in the range 5-95°C:

   - transfer into a reactor of an amount of water such that the final suspension containing the aluminumsilicate has a dry residue, determined by evaporating in a stove at 105°C an aliquot of the suspension until a constant weight, in the range 15-50% by weight, preferably 20-35% by weight;
   - addition under stirring, to the amount of water initially transferred into the reactor, in a time in the range 20-100 minutes, preferably 60-90 minutes, of:

- a solution of a sodium silicate of formula $Na_2O.nSiO_2$ wherein n ranges from 0.5 to 4,

and contemporaneously

- a solution of an aluminum salt so that in the mixture the molar ratio Al/Si is between 0.13 and 0.30, preferably 0.15-0.23, and the ratio $Na_2O/Al_2O_3$ is in the range 1.5-4, preferably 2-3.5.

2. A process according to claim 1, wherein the aqueous solution of the aluminum salt has a concentration in the range 5-18% by weight as $Al_2O_3$, and that of the sodium silicate is in the range 10-30% by weight as $SiO_2$.

3. A process according to claims 1-2, wherein the used sodium silicate has a ratio by weight $SiO_2/Na_2O$ between 2 and 4, preferably between 3 and 3.5.

4. A process according to claims 1-3, wherein the used aluminum salts are aluminum sulphate, aluminum polychloride and aluminum polychlorosulphate.

5. A process according to claim 4, wherein the usable aluminum salts have the following general formula:

$$AlN_bM_c(OH)_dCl_e(SO_4)_f$$

wherein:

N is an alkaline metal
M is an alkaline-earth metal,
b, c, d, e and f are integers such that the following equality is verified:

$$3 + b + 2c = d + e + 2f,$$

the molar ratio OH/3Al is in the range 0.25-0.8, preferably 0.3-0.65,
the limits of variation of the other parameters are the following: b in the range 0-1.5, c in the range 0-0.7,
e in the range 1-2.2, f in the range 0-0.3.

6. Aqueous suspensions of aluminosilicates obtainable by the process according to claims 1-5.

7. Aqueous suspensions according to claim 6, added of suspending agents in an amount in the range 0.05-0.1% by weight of the suspension.

8. Use of the aqueous suspensions according to claims 6-7, as such or diluted, in the paper production process.

9. Use according to claim 8, wherein mixtures formed by recycled paper and/or mixtures formed by cellulose are used.

10. Mixtures of recycled paper and/or cellulose containing as retention agent the suspensions according to claims 6-7.

| | European Patent Office | EUROPEAN SEARCH REPORT | Application Number<br>EP 01 11 3061 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 106 643 A (TOYO SODA MFG CO LTD) 25 April 1984 (1984-04-25)<br>* claims 10,14 *<br>* page 12, line 17 - line 29 *<br>* page 13, line 1 - line 4 *<br>--- | 1-6 | C01B33/26<br>C09C1/40<br>D21H17/68<br>D21H21/10 |
| A | FR 2 453 107 A (DEGREMONT) 31 October 1980 (1980-10-31)<br>* claims 1,4 *<br>* page 2, line 23 - page 3, line 33 *<br>* page 4, line 3 - line 11 *<br>* page 5, line 8 - line 16 *<br>--- | 1-6 | |
| A | WO 92 22497 A (NAT SILICATES LTD) 23 December 1992 (1992-12-23)<br>* examples 1-3 *<br>--- | 1 | |
| A | FR 2 009 019 A (HUBER CORP J M) 30 January 1970 (1970-01-30)<br>* claim 1 *<br>* page 19, line 18 - line 35 *<br>--- | 1 | |
| A | US 2 739 073 A (LEONARD BERTORELLI ORLANDO) 20 March 1956 (1956-03-20)<br>* claim 4 *<br>* example 1 *<br>--- | 1 | TECHNICAL FIELDS SEARCHED (Int.Cl.7)<br><br>C01B |
| A | EP 0 332 513 A (RHONE POULENC CHIMIE) 13 September 1989 (1989-09-13)<br>* column 2, line 15 - line 59 *<br>--- | 7 | |
| D,A | WO 96 05139 A (MINERALS TECH INC) 22 February 1996 (1996-02-22)<br>----- | | |

The present search report has been drawn up for all claims

| Place of search | Date of completion of the search | Examiner |
|---|---|---|
| THE HAGUE | 11 September 2001 | Rigondaud, B |

## ANNEX TO THE EUROPEAN SEARCH REPORT
## ON EUROPEAN PATENT APPLICATION NO.

EP 01 11 3061

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2001

| Patent document cited in search report | | Publication date | Patent family member(s) | | Publication date |
|---|---|---|---|---|---|
| EP 0106643 | A | 25-04-1984 | JP | 1498935 C | 29-05-1989 |
| | | | JP | 59069420 A | 19-04-1984 |
| | | | JP | 63046006 B | 13-09-1988 |
| | | | JP | 1611300 C | 30-07-1991 |
| | | | JP | 2032204 B | 19-07-1990 |
| | | | JP | 59073422 A | 25-04-1984 |
| | | | CA | 1215348 A | 16-12-1986 |
| | | | DE | 3370789 D | 14-05-1987 |
| | | | DK | 464283 A,B, | 09-04-1984 |
| | | | US | 4687653 A | 18-08-1987 |
| FR 2453107 | A | 31-10-1980 | AR | 223519 A | 31-08-1981 |
| | | | BR | 8002031 A | 25-11-1980 |
| WO 9222497 | A | 23-12-1992 | CA | 2044644 A | 15-12-1992 |
| | | | AU | 1893992 A | 12-01-1993 |
| | | | US | 5262143 A | 16-11-1993 |
| FR 2009019 | A | 30-01-1970 | BE | 733358 A | 21-11-1969 |
| | | | CA | 924078 A | 03-04-1973 |
| | | | DE | 1925868 A | 21-05-1970 |
| | | | DK | 144368 B | 01-03-1982 |
| | | | ES | 367460 A | 16-06-1971 |
| | | | FI | 53443 B | 31-01-1978 |
| | | | GB | 1265898 A | 08-03-1972 |
| | | | JP | 49028358 B | 25-07-1974 |
| | | | LU | 58668 A | 28-08-1969 |
| | | | NL | 6907758 A | 25-11-1969 |
| | | | NO | 126612 B | 05-03-1973 |
| | | | SE | 350763 B | 06-11-1972 |
| | | | US | 3582379 A | 01-06-1971 |
| | | | US | 3746559 A | 17-07-1973 |
| | | | US | 3784442 A | 08-01-1974 |
| US 2739073 | A | 20-03-1956 | NONE | | |
| EP 0332513 | A | 13-09-1989 | FR | 2628341 A | 15-09-1989 |
| | | | AT | 77098 T | 15-06-1992 |
| | | | AU | 3113789 A | 14-09-1989 |
| | | | BR | 8901182 A | 31-10-1989 |
| | | | DE | 68901734 D | 16-07-1992 |
| | | | DE | 68901734 T | 17-12-1992 |
| | | | DK | 112289 A | 10-09-1989 |
| | | | ES | 2034659 T | 01-04-1993 |
| | | | GR | 3005578 T | 07-06-1993 |
| | | | IE | 62208 B | 28-12-1994 |

For more details about this annex : see Official Journal of the European Patent Office, No. 12/82

**ANNEX TO THE EUROPEAN SEARCH REPORT
ON EUROPEAN PATENT APPLICATION NO.**

EP 01 11 3061

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2001

| Patent document cited in search report | | Publication date | Patent family member(s) | | Publication date |
|---|---|---|---|---|---|
| EP 0332513 | A | | JP | 2009711 A | 12-01-1990 |
| | | | KR | 9501786 B | 02-03-1995 |
| | | | PT | 89949 A,B | 10-11-1989 |
| | | | SG | 110992 G | 24-12-1992 |
| | | | ZA | 8901722 A | 27-12-1989 |
| WO 9605139 | A | 22-02-1996 | AU | 3363895 A | 07-03-1996 |
| | | | BR | 9508555 A | 25-11-1997 |
| | | | CA | 2197301 A | 22-02-1996 |
| | | | EP | 0775088 A | 28-05-1997 |
| | | | FI | 970581 A | 11-02-1997 |
| | | | IL | 114913 A | 06-12-2000 |
| | | | JP | 10504007 T | 14-04-1998 |
| | | | NO | 970619 A | 18-03-1997 |
| | | | PL | 318554 A | 23-06-1997 |
| | | | SK | 17197 A | 06-08-1997 |
| | | | US | 6184258 B | 06-02-2001 |

EPO FORM P0459

For more details about this annex : see Official Journal of the European Patent Office, No. 12/82